(19) Europäisches Patentamt
European Patent Office
Office européen des brevets

(11) EP 2 468 501 B1

(12) EUROPEAN PATENT SPECIFICATION

(45) Date of publication and mention of the grant of the patent:
**06.07.2016 Bulletin 2016/27**

(21) Application number: **10810057.9**

(22) Date of filing: **19.08.2010**

(51) Int Cl.:
***B32B 27/36*** *(2006.01)* ***B29C 45/14*** *(2006.01)*
***B32B 27/00*** *(2006.01)* ***C08J 5/18*** *(2006.01)*

(86) International application number:
**PCT/JP2010/064427**

(87) International publication number:
**WO 2011/021720 (24.02.2011 Gazette 2011/08)**

# (54) Molded article with decorative sheet

Formteil mit Dekorationsfolie

Pièce moulée avec une feuille décorative

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **21.08.2009 JP 2009191992**

(43) Date of publication of application:
**27.06.2012 Bulletin 2012/26**

(73) Proprietor: **Teijin Limited**
**Osaka-shi, Osaka 541-0054 (JP)**

(72) Inventor: **KINOSHITA Masami**
**Tokyo 100-0013 (JP)**

(74) Representative: **Adam, Holger**
**Kraus & Weisert**
**Patentanwälte PartGmbB**
**Thomas-Wimmer-Ring 15**
**80539 München (DE)**

(56) References cited:
**EP-A1- 1 123 791**
**WO-A1-2004/111106**
**WO-A1-2008/108492**
**WO-A1-2009/052463**
**JP-A- 2004 082 565**
**JP-A- 2007 223 203**
**JP-A- 2009 161 746**
**JP-A- 2009 167 296**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 468 501 B1

## Description

### TECHNICAL FIELD

The present invention relates to a molded article comprising a sheet, which has a base film comprising a polycarbonate resin containing a constituent unit able to be derived from a carbohydrate such as starch which is a biomass resource, is excellent in moldability, chemical resistance, deformation resistance, distortion resistance and whitening resistance, decorates a resin molded product and further provides hard coat properties such as abrasion resistance and high surface hardness.

### BACKGROUND ART

Heretofore, as means of decorating a resin molded product and providing hard coat properties such as abrasion resistance and high surface hardness, there has been known a method in which a decorative sheet for injection molding having a decorative layer on a base film and a hard coat layer as an outermost surface layer is bonded to a resin molded product at the time of molding. Although films made of various resins may be used as the base film, biaxially oriented aromatic polyester films and copolyester films are used from the viewpoints of physical properties and cost (refer to JP-A 2004-82565).

Although a decorative sheet for injection molding which has a biaxially oriented aromatic polyester film as the base film is excellent in chemical resistance and whitening resistance, it is unsatisfactory in terms of moldability such as deep drawability and shape follow-up property required to form a complicated shape and has a problem such as the occurrence of deformation or distortion after molding by residual stress generated by stretching the base film. Although a decorative sheet for injection molding which has a copolyester film as the base film is excellent in moldability, deformation resistance and distortion resistance, its solvent resistance is so unsatisfactory that the flatness of the film surface is deteriorated and/or the film is whitened by the solvent used to form a decorative layer, an adhesive layer or a hard coat layer, and further it is crystallized or whitened by heat at the time of molding or bonding it to a resin molded product.

Aromatic polyester resins and aromatic polycarbonate resins are generally manufactured from raw materials derived from oil resources. However, it has recently been worried about the depletion of oil resources, and the provision of plastic molded articles manufactured from raw materials obtained from biomass resources such as plants has been desired. Since it has been feared that global warming by the increase and accumulation of the discharge amount of carbon dioxide would cause climate change, the development of a plastic molded article material part produced from a plastic obtained from a plant-derived monomer which is "carbon neutral" even when it is disposed of after use has been desired. This demand is strong particularly from the field of large-sized molded articles.

It has been proposed to obtain a carbonate polymer through transesterification with diphenyl carbonate by using isosorbide as the plant-derived monomer (refer to GB 1079686 A). However, the obtained carbonate polymer is brown and not satisfactory as a molding material in terms of mechanical strength. There has also been proposed a polycarbonate obtained by copolymerizing bisphenol A as a carbonate copolymer of isosorbide and another dihydroxy compound (refer to JP S56-55425 A). Further, attempts are being made to improve the rigidity of a homopolycarbonate composed of isosorbide by copolymerizing isosorbide and an aliphatic diol (refer to WO2004/111106 A). The mechanical strength and chemical resistance of each of these polycarbonate materials are unsatisfactory for application in molded articles.

Although carbonate polymers comprising isosorbide have been proposed as described above, it cannot be said that the polymers are resins having good total balance among heat resistance, mechanical strength, chemical resistance and flowability to be used for molded articles. What are disclosed by these documents are only glass transition temperature and basic mechanical properties and not characteristic properties such as chemical resistance which is important for application in molded articles.

Among further prior art, JP 2009-167296 A discloses a cellulose/polycarbonate composite material using cellulose fiber producible from wood. Furthermore, JP 2001-019885 A discloses a binder resin comprising an acrylic resin or a polycarbonate resin and a dihydric phenol.

### DISCLOSURE OF THE INVENTION

The inventors of the present invention have conducted intensive studies in view of the above problems and have found that a molded article including a sheet which has improved moldability, chemical resistance, deformation resistance and high surface hardness can be provided by using a polycarbonate resin comprising isosorbide which is a plant-derived monomer as the substrate of a base film. The present invention has been accomplished based on this finding. Further, they have also found that such a sheet which is excellent in deformation resistance, distortion resistance and whitening resistance can yield a resin molded product with a printed or deposited sheet which has hard coat properties

such as abrasion resistance and high surface hardness.

The above object can be attained by employing the following means. That is, according to the present invention, there is provided a molded article, which comprises:

(i) a molded resin comprising an acrylic resin or a polycarbonate resin, and
(ii) a sheet which comprises a base film (ii-1) comprising a polycarbonate resin (I) and a printed or deposited layer (ii-2) formed on at least one side of the base film (ii-1), characterized in that the polycarbonate resin (I) comprises an ether diol residue represented by the following formula (1) in an amount of 15 to 100 mol% based on the total of all diol residues.

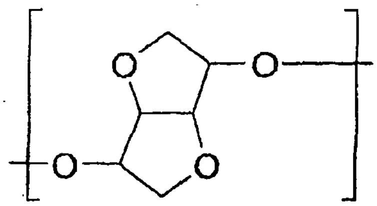

(1)

The polycarbonate resin may further comprise an aliphatic diol residue derived from an aliphatic dihydroxy compound.

This aliphatic dihydroxy compound is preferably a linear aliphatic diol or an alicyclic diol.

Further, the polycarbonate resin may further comprise an aromatic diol residue derived from an aromatic dihydroxy compound.

The sheet used in the molded article of the present invention may further have an adhesive layer as an outermost surface layer.

The total thickness of the above base film is preferably 10 to 600 μm, and the base film is preferably an unstretched film.

The base film may be a multi-layer film having a layer (layer A) containing a resin composition which comprises a polycarbonate resin containing a plant-derived ether diol residue and a layer (layer B) containing an acrylic resin, wherein the layer B is formed on at least one side of the layer A.

Alternatively, the base film may be a multi-layer film having a layer (layer A) containing a resin composition which comprises a polycarbonate resin containing a plant-derived ether diol residue and a layer (layer B) containing a resin composition which comprises a polycarbonate resin and a polyester-based thermoplastic elastomer, wherein the layer A is formed on at least one side of the layer B.

The haze of the base film is preferably not more than 10 %, and the total light transmittance of the base film is preferably not less than 85 %.

According to the present invention, there can be obtained an article comprising a sheet which is excellent in moldability such as deep drawability and shape follow-up property, chemical resistance at the time of processing such as forming a decorative layer, deformation resistance and distortion resistance that it is rarely deformed and distorted after molding, and whitening resistance that the resin is rarely whitened at the time of injection molding, can decorate a resin molded product and is provided with hard coat properties such as abrasion resistance and high surface hardness.

BEST MODE FOR CARRYING OUT THE INVENTION

Preferred embodiments of the present invention will be described hereinunder.

The sheet included in the molded article of the present invention has a printed or deposited layer formed on at least one side of a base film and may comprise an adhesive layer. That is, as for the constitution of the sheet used in the present invention, the sheet may consist of three layers which are a base film, a printed or deposited layer and an adhesive layer, three layers which are a decorative layer, a base film and an adhesive layer, or four layers which are a decorative layer, a base film, a printed or deposited layer and an adhesive layer.

In one embodiment of the molded article of the present invention, the sheet may also comprise a hard coat layer (ii-3) and an adhesive layer (ii-4), and wherein the hard coat layer (ii-3), the base film (ii-1), the printed or deposited layer (ii-2) and an adhesive layer (ii-4) are formed in this order in the sheet. That is, the sheet for injection molding used in the molded article of the present invention may consist of four layers which are a hard coat layer, a base film, a printed or deposited layer and an adhesive layer, four layers which are a hard coat layer, a printed or deposited layer, a base film and an adhesive layer, or five layers which are a hard coat layer, a printed or deposited layer, a base film, a printed or deposited layer and an adhesive layer.

The base film used in the present invention is preferably used whether it is a single-layer film or a multi-layer film.

<base film>

The base film used in the present invention comprises a polycarbonate resin which has an ether diol residue represented by the following formula (1).

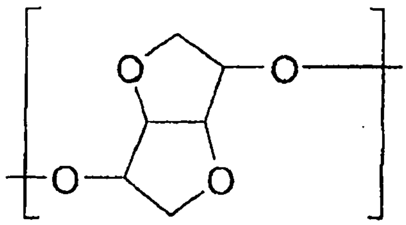

(1)

In an embodiment, the polycarbonate resin has an ether diol residue represented by the above formula (1) as a carbonate constituent unit represented by the following formula (1').

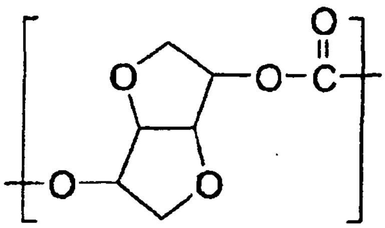

(1')

The above polycarbonate resin can be manufactured from an ether diol represented by the following formula (a) and a diester carbonate by melt polymerization.

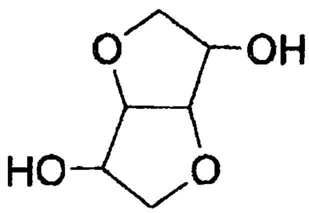

(a)

Examples of the ether diol include isosorbide, isomannide and isoidide represented by the following formulas (b) (c) and (d), respectively.

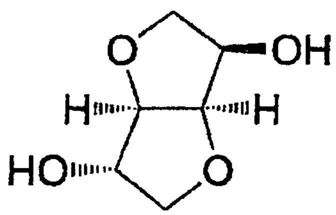

(b)

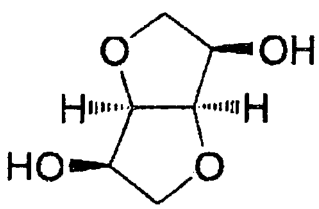

(c)

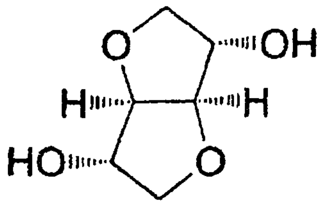

(d)

These carbohydrate-derived ether diols are also obtained from the biomass of the natural world and called "recyclable resources". Isosorbide is obtained by hydrogenating D-glucose obtained from starch and dehydrating the obtained hydrogenated product. The other ether diols are obtained by a similar reaction except for the starting material.

A polycarbonate resin containing a carbonate constituent unit derived from isosorbide(1,4;3,6-dianhydro-D-sorbitol) as the carbonate constituent unit represented by the above formula (1') is particularly preferred. Isosorbide is an ether diol which is easily produced from starch, can be acquired in abundance as a resource and superior to isomannide and isoidide in production ease, property and application range.

A polycarbonate containing a diol residue represented by the formula (1) in an amount of preferably 15 to 100 mol%, more preferably 30 to 100 mol%, much more preferably 40 to 100 mol%, particularly preferably 50 to 100 mol% based on the total of all the diol residues is preferred.

In the present invention, other diol compounds which can be used in combination with the ether diol include linear aliphatic diol compounds, alicyclic diol compounds and aromatic dihydroxy compounds. They may be used alone or in combination.

The linear aliphatic diol compounds include ethylene glycol, 1,3-propanediol, 1,4-butanediol, 1,5-pentanediol, neopentyl glycol, 1,6-hexanediol, 1,7-heptanediol, 1,8-octanediol, 2-ethyl-1,6-hexanediol, 2,2,4-trimethyl-1,6-hexanediol, 1,10-decanediol, hydrogenated dilinoleyl glycol and hydrogenated dioleyl glycol. Out of these, 1,3-propanediol, 1,4-butanediol, 1,6-hexanediol and 1,10-decanediol are preferred. These linear aliphatic diols may be used alone or in combination of two or more.

The alicyclic diols include cyclohexanediols such as 1,2-cyclohexanediol, 1,3-cyclohexanediol, 1,4-cyclohexanediol and 2-methyl-1,4-cyclohexanediol, cyclohexanedimethanols such as 1,2-cyclohexanedimethanol, 1,3-cyclohexanedimethanol and 1,4-cyclohexanedimethanol, norbornane dimethanols such as 2,3-norbornane dimethanol and 2,5-dinorbornane dimethanol, tricyclodecane dimethanol, pentacyclopentadecane dimethanol, 1,3-adamantanediol, 2,2-adamantanediol, decalin dimethanol and 3,9-bis(2-hydroxy-1,1-dimethylethyl)-2,4,8,10-tetraoxaspiro[5.5]undecane. Out of these, 1,4-cyclohexane dimethanol, tricyclodecane dimethanol and 3,9-bis(2-hydroxy-1,1-dimethylethyl)-2,4,8,10-tetraoxaspiro[5.5]undecane are preferred. These alicyclic diols may be used alone or in combination of two or more.

The aromatic dihydroxy compounds include 4'-biphenol, 3,3',5,5'-tetrafluoro-4,4'-biphenol, α,α'-bis(4-hydroxyphenyl)-o-diisopropylbenzene, α,α'-bis(4-hydroxyphenyl)-m-diisopropylbenzene (commonly called "bisphenol M"), α,α'-bis(4-hydroxyphenyl)-p-diisopropylbenzene, α,α'-bis(4-hydroxyphenyl)-m-bis(1,1,1,3,3,3-hexafluoroisopropyl)benzene, 9,9-bis(4-hydroxyphenyl)fluorene, 9,9-bis(4-hydroxy-3-methylphenyl)fluorene, 9,9-bis(3-fluoro-4-hydroxyphenyl)fluorene, 9,9-bis(4-hydroxy-3-trifluoromethylphenyl)fluorene, 1,1-bis(4-hydroxyphenyl)cyclohexane, 1,1-bis(4-hydroxyphenyl)-3,3,5-trimethylcyclohexane, 1,1-bis(4-hydroxyphenyl)-4-isopropylcyclohexane, 1,1-bis(3-cyclohexyl-4-hydroxypheny)cyclohexane, 1,1-bis(4-hydroxyphenyl)cyclopentane, 1,1-bis(3-fluoro-4-hydroxyphenyl)cyclohexane, 1,1-bis(4-hydroxyphenyl)perfluorocyclohexane, 4,4'-dihydroxydiphenyl ether, 4,4'-dihydroxy-3,3'-dimethyldiphenyl ether, 4,4'-dihydroxydiphenyl sulfone, 4,4'-dihydroxydiphenyl sulfoxide, 4,4'-dihydroxydiphenyl sulfide, 3,3'-dimethyl-4,4'-dihydroxydiphenyl sulfide, 3,3'-dimethyl-4,4'-dihydroxydiphenyl sulfone, 4,4'-dihydroxydiphenyl sulfone, 4,4'-dihydroxy-3,3'-diphenyl sulfide, 4,4'-dihydroxy-3,3'-diphenyl sulfoxide, 4,4'-dihydroxy-3,3'-diphenyl sulfone, 1,1-bis(4-hydroxyphenyl)methane, 1,1-bis(4-hydroxyphenyl)ethane, 2,2-bis(4-hydroxyphenyl)propane (commonly called "bisphenol A"), 1,1-bis(4-hydroxyphenyl)-1-phenylethane, 2,2-bis(4-hydroxy-3-methylphenyl)propane (commonly called "bisphenol C"), 2,2-bis(4-hydroxyphenyl)butane, 2,2-bis(4-hydroxyphenyl)pentane, 2,2-bis(4-hydroxy-3-phenylphenyl)propane, 2,2-bis(3-isopropyl-4-hydroxyphenyl)propane, 2,2-bis(3-tert-butyl-4-hydroxyphenyl)propane, 2,2-bis(4-hydroxyphenyl)butane, 4,4-bis(4-hydroxyphenyl)heptane, 2,2-bis(4-hydroxyphenyl)octane, 1,1-bis(4-hydroxyphenyl)-decane, 1,1-bis(3-methyl-4-hydroxyphenyl)decane, 1,1-bis(2,3-dimethyl-4-hydroxyphenyl)decane, 2,2-bis(3-bromo-4-hydroxyphenyl)propane, bis(4-hydroxyphenyl)diphenylmethane, 1,1-bis(4-hdyroxyphenyl)-4-isopropylcyclohexane, 2,2-bis(4-hydroxyphenyl)-1,1,1,3,3,3-hexafluoropropane (commonly called "bisphenol AF"), 2,2-bis(4-hydroxy-3-methylphenyl)-1,1,1,3,3,3-hexafluoro propane, 2,2-bis(3,5-dimethyl-4-hydroxyphenyl)-1,1,1,3,3,3-hexafluoropropane, 2,2-bis(3-fluoro-4-hydroxyphenyl)-1,1,1,3,3,3-hexafluoro propane, 2,2-bis(3,5-difluoro-4-hydroxyphenyl)-1,1,1,3,3,3-hexafluoroprpane, 2,2-bis(3,5-dibromo-4-hydroyphenyl)propane, 2,2-bis(3,5-dichloro-4-hydroxyphenyl)propane, 2,2-bis(3,5-dimethyl-4-hydroxyphenyl)propane and 2,2-bis(3-cyclohexyl-4-hydroxyphenyl)propane.

Out of these, bisphenol M, 9,9-bis(4-hydroxy-3-methylphenyl)fluorene, 1,1-bis(4-hydroxyphenyl)cycolohexane, 1,1-bis(4-hydroxyphenyl)-3,3,5-trimethylcyclohexane, 3,3'-dimethyl-4,4'-dihdyroxydiphenyl sulfide, bisphenol A, bisphenol C, bisphenol AF and 1,1-bis(4-hydroxyphenyl)decane are preferred. These aromatic diols may be used alone or in combination of two or more.

The above diol residue derived from another diol compound can be contained in the polycarbonate resin in an amount of preferably 0 to 85 mol%, more preferably 0 to 70 mol%, much more preferably 0 to 60 mol%, particularly preferably 0 to 50 mol% based on the total of all the diol residues.

The reaction temperature is preferably as low as possible to suppress the decomposition of the ether diol and obtain a resin which is rarely colored and has high viscosity. To promote the polymerization reaction properly, the polymerization temperature is preferably 180 to 280°C, more preferably 180 to 260°C.

A method in which the ether diol and the diester carbonate are heated under normal pressure to be pre-reacted with each other in the initial stage of the reaction, the pressure is gradually reduced, and the formed alcohol or phenol is easily distilled off by reducing the pressure of the reaction system to 1.3 x $10^{-3}$ to 1.3 x $10^{-5}$ MPa in the latter stage of the reaction is preferred. The reaction time is preferably 0.5 to 4 hours.

The diester carbonate is an ester such as an aryl group or aralkyl group having 6 to 12 carbon atoms which may be substituted, or an alkyl group having 1 to 4 carbon atoms. Specific examples of the diester carbonate include diphenyl carbonate, bis(chlorophenyl)carbonate, m-cresy carbonate, dinaphthyl carbonate, bis(diphenyl)carbonate, dimethyl carbonate, diethyl carbonate and dibutyl carbonate. Out of these, diphenyl carbonate is particularly preferred from the viewpoints of reactivity and cost.

The diester carbonate is preferably used in an amount of 1. 02 to 0. 98 moles based on 1 mole of the ether diol. This molar ratio is more preferably 1.01 to 0.98, much more preferably 1.01 to 0.99. When the molar ratio of the diester carbonate is higher than 1.02, the carbonic acid ester residue functions as a terminal capping agent and a sufficient polymerization degree is not obtained disadvantageously. When the molar ratio of the diester carbonate is lower than 0.98, a sufficient polymerization degree is not obtained as well disadvantageously.

The polymerization catalyst is selected from alkali metal compounds such as sodium hydroxide, potassium hydroxide, cesium hydroxide, sodium carbonate, potassium carbonate, cesium carbonate, sodium hydrogen carbonate, potassium hydrogen carbonate, cesium hydrogen carbonate, and sodium salts, potassium salts and cesium salts of a dihydric phenol; alkali earth metal compounds such as calcium hydroxide, barium hydroxide and magnesium hydroxide; and nitrogen-containing basic compounds such as tetramethylammonium hydroxide, tetraethylammonium hydroxide, tetrabutylammonium hydroxide, trimethylamine and triethylamine. They may be used alone or in combination of two or more. A combination of a nitrogen-containing basic compound and an alkali metal compound is particularly preferred. A resin polymerized by using the catalyst is preferred because its 5 % weight loss temperature is kept fully high.

The amount of the polymerization catalyst is preferably selected from a range from 1 x $10^{-9}$ to 1 x $10^{-3}$ equivalent, more preferably from 1 x $10^{-8}$ to 5 x $10^{-4}$ equivalent based on 1 mole of the diester carbonate component. The reaction system is preferably maintained in an atmosphere of an inert gas to the raw materials, the reaction mixture and the reaction product, such as nitrogen. Examples of the inert gas except for nitrogen include argon. Further, additives such as an antioxidant may be added as required.

Although the obtained polycarbonate resin has a hydroxyl group or a diester carbonate residue at a terminal, a polycarbonate resin into which a terminal group has been introduced in limits that do not impair its characteristic properties may be used as the polycarbonate used as the polymer substrate of the base film of the present invention. The terminal group can be introduced by adding a monohydroxy compound at the time of polymerization. A hydroxyl compound represented by the following formula (2) or (3) is preferably used as the monohydroxy compound.

$$HO\text{-}R^1 \qquad (2)$$

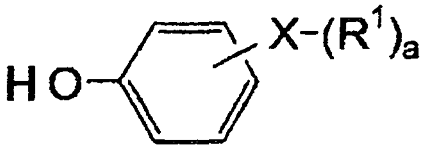

(3)

In the above formulas (2) and (3), $R^1$ is an alkyl group having 4 to 30 carbon atoms, aralkyl group having 7 to 30 carbon atoms, perfluoroalkyl group having 4 to 3 0 carb atoms or organic siloxy group represented by the following formula (4), preferably an alkyl group having 4 to 20 carbon atoms, perfluoroalkyl group having 4 to 20 carbon atoms or the group of the above formula (4), particularly preferably an alkyl group having 8 to 20 carbon atoms or the group of the above formula (4).

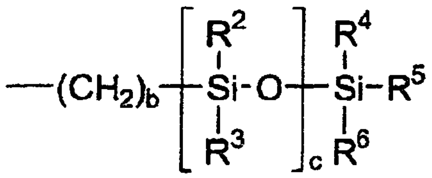 (4)

X is at least one bond selected from the group consisting of single bond, ether bond, thioether bond, ester bond, amino bond and amide bond, preferably at least one bond selected from the group consisting of single bond, ether bond and ester bond, particularly preferably a single bond or an ester bond. "a" is an integer of 1 to 5, preferably 1 to 3, particularly preferably 1.

In the above formula (4), $R^2$, $R^3$ , $R^4$, $R^5$ and $R^6$ are each independently at least one group selected from the group consisting of alkyl group having 1 to 10 carbon atoms, cycloalkyl group having 6 to 20 carbon atoms, alkenyl group having 2 to 10 carbon atoms, aryl group having 6 to 10 carbon atoms and aralkyl group having 7 to 20 carbon atoms, preferably at least one group selected from the group consisting of alkyl group having 1 to 10 carbon atoms and aryl group having 6 to 10 carbon atoms, particular preferably at least one group selected from the group consisting of methyl group and phenyl group. "b" is an integer of 0 to 3, preferably 1 to 3, particularly preferably 2 to 3. "c" is an integer of 4 to 100, preferably 4 to 50, particularly preferably 8 to 50.

Since the polycarbonate resin used in the present invention has a carbonate constituent unit obtained from an ether diol derived from a plant as a recyclable resource and represented by the above formula (a) in the main chain structure, the monohydroxy compound is also preferably a raw material obtained from a recyclable resource such as a plant. Examples of the monohydroxy compound obtained from a plant include long-chain alkyl alcohols having 14 or more carbon atoms obtained from plant oil, such as cetanol, stearyl alcohol and behenyl alcohol.

The polycarbonate resin used as the polymer substrate of the base film of the present invention has a biogenic matter content measured based on ASTM D6866 05 of preferably 25 to 100 %, more preferably 30 to 100 %.

The polycarbonate resin used as the above polymer substrate has a melt viscosity measured with a capillary rheometer at 250°C of preferably $0.05 \times 10^3$ to $4.0 \times 10^3$ Pa ·s, more preferably $0.1 \times 10^3$ to $3.0 \times 10^3$ Pa·s, particularly preferably $0.1 \times 10^3$ to $2.0 \times 10^3$ Pa·s at a shear rate of 600 $sec^{-1}$. When the melt viscosity falls within this range, the polycarbonate resin can be molded under a good condition under which the decomposition of the polymer is suppressed and a molded article having excellent characteristic properties can be provided. When the melt viscosity is lower than the lower limit, if molding is possible, mechanical properties become unsatisfactory, when the melt viscosity is higher than the upper limit, melt flowability becomes unsatisfactory, and when the molding temperature is raised, the decomposition of the polymer is accelerated.

The specific viscosity at 20°C of a solution prepared by dissolving 0.7 g of the polycarbonate resin used as the substrate of the base film of the present invention in 100 ml of methylene chloride is 0.14 to 0.50. The lower limit of the specific viscosity is preferably 0.20, more preferably 0.22. The upper limit is preferably 0.45, more preferably 0.37, particularly preferably 0.35. When the specific viscosity is lower than 0.14, it is difficult to provide satisfactory mechanical strength to the obtained base film and when the specific viscosity is higher than 0.50, melt flowability becomes too high with the result that the melt temperature having flowability required for molding becomes higher than the decomposition temperature.

A mixture of polycarbonates may be contained in one layer, and the base film may be a multi-layer film: In this case, it is preferred that all the polycarbonates in use should satisfy the above requirements.

The lower limit of the glass transition temperature (Tg) of the polycarbonate resin used as the substrate of the base film of the present invention is preferably 80°C, more preferably 90°C or higher and the upper limit thereof is preferably 165°C. When Tg is lower than 80°C, the polycarbonate resin is inferior in heat resistance and when Tg is higher than 165 °C, the polycarbonate resin is inferior in melt flowability at the time of molding and injection molding becomes impossible at a temperature range at which the decomposition of a polymer rarely occurs. Tg is measured by means of DSC (Model DSC2910 of TA Instruments Co., Ltd.

The lower limit of the 5 % weight loss temperature of the polycarbonate resin used as the substrate of the base film of the present invention is preferably 330°C, more preferably 340°C, much more preferably 350°C. When the 5 % weight low temperature falls within the above range, the decomposition of the resin rarely occurs at the time of molding advantageously. To raise the 5 % weight loss temperature, the selection of a preferred compound as a melt polymerization catalyst is effective as described above. The 5 % weight loss temperature is measured by means of TGA (Model TGA2950) of TA Instruments Co., Ltd.

The polycarbonate resin constituting the base film of the present invention preferably contains a heat stabilizer to obtain a better hue and stable flowability. The heat stabilizer preferably contains a phosphorus-based stabilizer, and a pentaerythritol type phosphite compound represented by the following formula (5) is preferred as the phosphorus-based stabilizer.

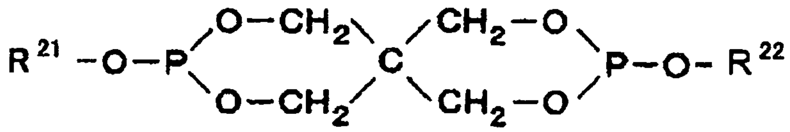

(5)

In the above formula, $R^{21}$ and $R^{22}$ are each independently a hydrogen atom, alkyl group having 1 to 20 carbon atoms, aryl or alkylaryl group having 6 to 20 carbon atoms, aralkyl group having 7 to 30 carbon atoms, cycloalkyl group having 4 to 20 carbon atoms or 2-(4-oxyphenyl)propyl-substituted aryl group having 15 to 25 carbon atoms. The cycloalkyl group and the aryl group may be substituted by an alkyl group.

Examples of the above pentaerythritol type phosphite compound include distearyl pentaerythritol diphosphite, bis(2,4-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, phenyl bisphenol A pentaerythritol diphosphite, bis(nonylphenyl)pentaerythritol diphosphite and dicyclohexyl pentaerythritol diphosphite. Out of these, distearyl pentaerythritol diphosphite and bis(2,4-di-tert-butylphenyl)pentaerythritol diphosphite are preferred.

Other phosphorus-based stabilizers except for pentaerythritol type phosphite compounds include phosphite compounds other than the above phosphite compounds, phosphate compounds, phosphonite compounds and phosphonate compounds.

The above phosphite compounds include triphenyl phosphite, tris(nonylphenyl)phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, 2,2-methylenebis(4,6-di-tert-butylphenyl)octyl phosphite, tris(diethyllphenyl)phosphite, tris(di-iso-propylphenyl)phosphite, tris(di-n-butylphenyl)phosphite, tris(2,4-di-tert-butylphenyl)phosphite and tris(2,6-di-tert-butylphenyl)phosphite.

Other phosphite compounds which react with a dihydric phenol to have a cyclic structure may also be used. Examples thereof include 2,2'-methylenebis(4,6-di-tert-butylphenyl)(2,4-di-tert-butylphenyl)phosphite, 2,2'-methylenebis(4,6-di-tert-butylphenyl)(2-tert-butyl-4-methylphenyl)phosphite, 2,2'-methylenebis(4-methyl-6-tert-butylphenyl)(2-tert-butyl-4-methylphenyl)phosphite and 2,2'-ethylidenbis(4-methyl-6-tert-butylphenyl)(2-tert-butyl-4-methylphenyl phosphite.

The above phosphate compounds include tributyl phosphate, trimethyl phosphate, tricresyl phosphate, triphenyl phosphate, trichlorophenyl phosphate, triethyl phosphate, diphenylcresyl phosphate, diphenyl monoorthoxenyl phosphate, tributoxyethyl phosphate, dibutyl phosphate, dioctyl phosphate and diisopropyl phosphate. Out of these, triphenyl phosphate and trimethyl phosphate are preferred.

The above phosphonite compounds include tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite, tetrakis(2,6-di-tert-butylphenyl)-3,3'-biphenylene diphosphonite, bis(2,4-di-tert-butylphenyl)-4-phenyl-phenyl phosphonite, bis(2,4-di-tert-butylphenyl)-3-phenyl-phenyl phosphonite, bis(2,6 -di-n-butylphenyl)-3-phenyl-phenyl phosphonite, bis(2,6-di-tert-butylphenyl)-4-phenyl-phenyl phosphonite and bis(2,6-di-tert-butylphenyl)-3-phenyl-phenyl phosphonite. Out of these, tetrakis(di-tert-butylphenyl)-biphenylene diphosphonites and bis(di-tert-butylphenyl)-phenyl-phenyl phosphonites are preferred, and tetrakis(2,4-di-tert-butylphenyl)-biphenylene diphosphonites and bis(2,4-di-tert-butylphenyl)- phenyl-phenyl phosphonites are more preferred. These phosphite compounds may be and are preferably used in combination with a phosphite compound having an aryl group substituted by two or more of the above alkyl groups.

The above phosphonate compounds include dimethyl benzenephosphonate, diethyl benzenephosphonate and dipropyl benzenephosphonate.

The above phosphorus-based stabilizers may be used alone or in combination of two or more. It is preferred to use at least a pentaerythritol type phosphite compound in an effective amount. The phosphorus-based stabilizer is used in an amount of preferably 0.001 to 1 part by weight, more preferably 0.01 to 0.5 part by weight, much more preferably 0.01 to 0.3 part by weight based on 100 parts by weight of the polycarbonate resin.

An antistatic agent is preferably added to or copolymerized with the polycarbonate resin used as the substrate of the base film of the present invention. The antistatic agent may be a known anionic, cationic, nonionic or amphoteric antistatic agent. Out of these, sodium alkylsulfonates and sodium alkylbenzenesulfonates all of which are anionic antistatic agents are preferably used from the viewpoint of heat resistance.

When the antistatic agent is added at the time of polymerization, an antioxidant is preferably added from the viewpoint of handling ease. Examples of the antioxidant include known antioxidants such as phenolic antioxidants, phosphite-based antioxidants and thioether-based antioxidants, and further mixtures thereof.

It is important that the base film of the present invention should be used as a film having a plane orientation coefficient of 0 to 0.05 from the viewpoint of moldability. The plane orientation coefficient is preferably 0 to 0.03. When

the plane orientation coefficient is higher than 0.05, it may be difficult to form a molded product having a large molding drawing ratio. Thus, moldability may degrade disadvantageously. The term "plane orientation coefficient" as used herein means "fn" represented by the following equation (6) and indicates the orientation degree of a film.

$$\text{Plane orientation coefficient: } fn = (Nx + Ny)/2 - Nz \quad (6)$$

In the equation (6), Nx, Ny and Nz are the refractive indices of the base film in a film forming direction, width direction and thickness direction and can be measured by using an Abbe' s refractometer, respectively. When the plane orientation coefficient is to be measured and the base film of the present invention is existent as a layer of the above sheet, the surface layer is filed off by using fine sandpaper to expose the base film, thereby making it possible to measure the refractive index of the base film. Similarly, when the base film itself is a laminate, the surface layer is filed off to exposure the layer to be measured for its refractive index, thereby making it possible to measure the refractive index of each layer.

When the measurement direction of the refractive index of the base film is unknown as the film forming direction of the base film is not known, the slow axis direction and the direction orthogonal to the slow axis direction are determined by confirming the slow axis direction by means of a phase difference measuring instrument such as the ellipsometer of JASCO Corporation or KOBRA of Oji Scientific Instruments Co. , Ltd. The plane orientation coefficient can be obtained by measuring the refractive index by the above method, supposing that the obtained slow axis direction is the film forming direction and the direction orthogonal to the slow axis direction is the width direction.

Various kinds of particles can be added to the base film used in the molded article of the present invention according to purpose and use. The particles to be added are not particularly limited if they are inactive to the polycarbonate resin of the present invention. Examples of the particles include inorganic particles, organic particles, crosslinked polymer particles and internal particles formed in the polymerization system. These different kinds of particles may be used alone or in combination of two or more. The amount of the particles is preferably 0.01 to 10 wt%, more preferably 0.05 to 3 wt% based on the total weight of the base film.

In order to improve handling ease by providing slipperiness to the base film, the average particle diameter of the particles to be added is preferably 0.001 to 20 μm, more preferably 0.01 to 10 μm. When the average particle diameter is larger than 20 μm, a film defect is readily produced, thereby causing the deterioration of moldability disadvantageously and when the average particle diameter is smaller than 0.001 μm, satisfactory slipperiness may not be obtained disadvantageously.

Examples of the inorganic particles include particles of carbonates such as calcium carbonate, magnesium carbonate and barium carbonate, sulfates such as calcium sulfate and barium sulfate, composite oxides such as kaolin and talc, phosphates such as lithium phosphate, calcium phosphate and magnesium phosphate, oxides such as aluminum oxide, silicon oxide, titanium oxide and zirconium oxide, and salts such as lithium fluoride.

Examples of the organic particles include particles of calcium oxalate and terephthalates of calcium, barium, zinc, manganese and magnesium.

Examples of the crosslinked polymer particles include particles of homopolymers and copolymers of a vinyl-based monomer such as divinyl benzene, styrene, acrylic acid or methacrylic acid. Other organic fine particles such as polytetrafluoroethylene, benzoguanamine resin, thermosetting epoxy resin, unsaturated polyester resin, thermosetting urea resin and thermosetting phenolic resin particles are also preferably used.

Known additives such as a flame retardant, a heat stabilizer, an antioxidant, an ultraviolet absorbent, an antistatic agent, a plasticizer, a viscosity providing agent, an aliphatic acid ester, an organic lubricant such as wax, a defoaming agent such as polysiloxane, and a colorant such as a pigment or a dye can be mixed with the base film of the present invention in suitable amounts as required.

When the printed or deposited layer, a hard coat layer or an adhesive layer is formed on the surface of the base film used in the present invention, the surface of the base film may be subjected to a pre-treatment such as corona discharge treatment, UV treatment or the application of an anchor coating agent in advance in order to improve its adhesion to each layer. As the anchor coating agent is preferably used at least one resin selected from the group consisting of polyester resin, acrylic resin, acryl-modified polyester resin, polyurethane resin, polysiloxane and epoxy resin.

A printed or deposited layer is formed on at least one side of the base film in the sheet of the molded article of the present invention. The printed or deposited layer used in the present invention can take any form. For example, the printed layer or deposited layer which is directly formed on the base film, is a colored resin layer which is formed on the base film, or a film layer which is decorated by printing or deposition. These layers are not particularly limited.

Preferred examples of the binder resin material of the printed layer which is a type of the above printed or deposited layer include polyurethane-based resins, vinyl-based resins, polyamide-based resins, polyester-based resins,

acrylic resin, polyvinyl acetal-based resins, polyester urethane-based resins, cellulose ester-based resins, alkyd-based resins and thermoplastic elastomer-based resins. Out of these resins, resins which can provide a soft film are particularly preferred. A color ink containing a suitable color pigment or dye as a colorant is preferably mixed into the binder resin.

As means of forming the printed layer, offset printing, gravure printing and screen printing are preferably employed. When multi-color printing or gradation color is required, offset printing and gravure printing are preferred. In the case of a single color, coating techniques such as gravure coating, roll coating and comma coating techniques may be employed. According to pattern, a printing technique in which a printed layer is formed on the entire surface of a film or a printing technique in which a printed layer is partially formed may be employed.

The material for forming the deposited layer which is a type of the above printed or deposited layer is preferably a metal such as aluminum, silicon, zinc, magnesium, copper, chromium or nickel chromium. From the viewpoints of design and cost, aluminum is more preferred but an alloy of two or more metal components may be used. As means of forming a metal thin film layer by deposition, an ordinary vacuum deposition method may be employed. In addition, a technique for activating an evaporated product by ion plating, sputtering or plasma may also be used. Chemical vapor deposition (so-called CVD) may also be used as a vapor deposition method in a broad sense. As evaporation sources for these, a resistance heating board system, radiation or high-frequency heating crucible system, or electron beam heating system may be used.

When the colored resin layer is to be laminated or formed on the base film as a type of printed or deposited layer, a resin which has been colored by a dye, an organic pigment or an inorganic pigment as a colorant is formed by a coating technique or an extrusion lamination technique.

When the printed layer is formed, the thickness thereof is not limited as long as the effect of the present invention is not impaired but preferably 0.01 to 100 μm from the viewpoint of moldability.

When the deposited layer is formed, the thickness thereof is not limited as long as the effect of the present invention is not impaired but preferably 0.01 to 100 μm from the viewpoint of moldability.

When the resin layer is formed, the thickness thereof is not limited as long as the effect of the present invention is not impaired but preferably 0.01 to 100 μm from the viewpoint of moldability.

Even when a layer except for the printed layer, deposited layer and resin layer is used, the thickness thereof is not limited as long as the effect of the present invention is not impaired but preferably 0.01 to 100 μm from the viewpoint of moldability.

In the sheet included in the molded article of the present invention, it is desired that a hard coat layer should be formed. This hard coat layer is made of an acrylic resin, urethane-based resin, melamine-based resin, organic silicate compound, silicone-based resin or metal oxide. Silicone-based resin and acrylic resin are preferred from the viewpoints of hardness and durability, and acrylic resin, especially active ray curable acrylic resin or thermosetting acrylic resin is more preferred from the viewpoints of curability, flexibility and productivity.

Various additives may be mixed into the hard coat layer used in the present invention as required as long as the effect of the present invention is not impaired. For example, a stabilizer such as an antioxidant, an optical stabilizer or an ultraviolet absorbent, a surfactant, a leveling agent and an antistatic agent may be used.

To form the hard coat layer, off-line coating and in-line coating techniques may be employed.

In the off-line coating technique, a coating material for the coating layer comprising a thermosetting resin or an active ray curable resin as the main component is applied to the base film. In the in-line coating technique, a coating material for the hard coat layer is applied in the step of forming the base film.

As means of applying a coating material containing a composition for forming the hard coat layer, various coating techniques such as reverse coating, gravure coating, rod coating, bar coating, die coating and spray coating techniques may be employed.

Examples of the active ray used to cure the active ray curable resin include electromagnetic rays for polymerizing an acrylic vinyl group, such as ultraviolet rays (UV), electron rays and radiant rays (such as α-ray, β-raw and γ-ray). Practically, UV is easy and preferred. As UV sources may be used ultraviolet fluorescent lamps, low-pressure mercury lamps, high-pressure mercury lamps, super high-pressure mercury lamps, xenon lamps and carbon arc lamps. When the active ray is applied under a low-oxygen concentration, the active ray curable resin can be cured efficiently. Further, the electron ray system is advantageous because a photopolymerization initiator or an optical sensitizer does not need to be contained in the coating layer although equipment is expensive and must be operated in an inert gas atmosphere.

Heat required for the thermosetting of a thermosetting resin can be obtained by using a steam heater, an electric heater, an infrared heater or a far infrared heater to prepare air or inert gas heated at 140 °C or higher and applying it to the substrate or the coating film by using a slit nozzle. Air heated at 200°C or higher is preferred, and nitrogen heated at 200°C or higher is more preferred as the curing speed is accelerated.

The thickness of the hard coat layer may be determined according to use but preferably 0.1 to 30 μm, more preferably 1 to 15 μm. When the thickness of the hard coat layer is smaller than 0.1 μm, if the layer is fully cured, the hard coat layer is unsatisfactory in terms of surface hardness and apt to be scratched as it is too thin. When the thickness is larger than 30 μm, the cured film is apt to be cracked by bending stress.

To provide adhesion between the resin to be molded and the sheet used in the molded article, an adhesive layer can be formed on the above sheet used in the present invention. The material of the adhesive layer is preferably of a thermosensitive type or a pressure-sensitive type. When the resin to be molded by using the above sheet is an acrylic resin, an acrylic resin is preferably used in the adhesive layer. When the resin to be molded by using the above sheet is a polyphenylene oxide polystyrene-based resin, a polycarbonate-based resin, a styrene copolymer-based resin or a polystyrene-based resin, an acrylic resin, a polystyrene-based resin or a polyamide-based resin which has affinity for these resins is preferably used in the adhesive layer. When the resin to be molded by using the above sheet is a polypropylene-based resin, a chlorinated polyolefin-based resin, a chlorinated ethylene-vinyl acetate copolymer-based resin, a cyclic rubber or a chromane indene-based resin is preferably used in the adhesive layer.

Known methods of forming the adhesive layer may be used, as exemplified by coating techniques such as roll coating, gravure coating and comma coating techniques, and printing techniques such as gravure printing and screen printing techniques.

The total thickness of the base film used in the present invention is preferably 10 to 600 μm, more preferably 20 to 400 μm, particularly preferably 40 to 300 μm. When the total thickness of the base film is smaller than 10 μm, the stiffness, film forming stability and flatness of the film deteriorate and the film readily creases at the time of molding disadvantageously. When the total thickness is larger than 600 μm, handling ease becomes worse and the degradation of moldability may occur in a case disadvantageously.

The base film of the present invention has a haze of preferably 0 to 10 %, more preferably 0 to 5 %, much more preferably 0 to 3 %, particularly preferably 0 to 2 %. When the haze of the base film is larger than 10 % and the base film is used as part of the sheet used in the molded article, visibility may deteriorate disadvantageously. Particularly when the printed or deposited layer is formed on the adhesive layer side (opposite to the hard coat layer side) with the base film as the center, visibility may deteriorate disadvantageously. Although the haze is preferably as small as possible, it is difficult to reduce it to less than 0.1 % in fact.

The base film of the present invention has a total light transmittance of preferably 85 to 100 %, more preferably 90 to 100 %, particularly preferably 92 to 100 %. When the total light transmittance is lower than 85 % and the base film is used as the sheet for the molded article, visibility may deteriorate. Particularly when the printed or deposited layer is formed on the adhesive layer side (opposite to the hard coat layer side) with the base film as the center, visibility may deteriorate disadvantageously.

A description is subsequently given of a simultaneous injection-molding and decorating method which is the use purpose of the sheet included in the molded article of the present invention. The simultaneous injection-molding and decorating method is to decorate a resin molded product by arranging the sheet between a pair of molds, clamping the molds, filling a flowing resin into the cavity formed by these molds, solidifying the resin, and laminating the sheet for injection molding on the surface of the resin molded product simultaneously with the molding of the resin molded product as described in JP 50-19132 B. At this point, the hard coat layer side of the sheet used in the molded article is arranged in contact with the mold and the resin is poured into the adhesive layer side.

The simultaneous injection-molding and decorating method may be carried out in various ways. For example, the pre-molding of the sheet may or may not be carried out. The preheating may or may not be carried out. When pre-molding is carried out, the sheet is generally preheated.

When the squeeze of the sheet is large, pre-molding is preferably carried out. When the squeeze of the sheet is small, the sheet may be molded with the pressure of the resin in a flowing state to be injected. When the squeeze is small, the sheet may be molded with the pressure of the resin in a f lowing state charged into the mold simultaneously with the injection of the resin without pre-molding. When the sheet is to be molded with the resin pressure, the heat of the injected resin may be used without preheating the sheet. The pre-molding may be carried out by a method in which pre-molding is carried out by using an injection mold which is also used as a vacuum mold or a method in which the sheet is vacuum molded (off-line pre-molded) by using another vacuum mold before the sheet is supplied between injection molds. The method in which the injection mold is also used as a vacuum mold is preferably used because pre-molding can be carried out efficiently and accurately. In the present invention, vacuum molding includes vacuum pressure molding.

In the simultaneous injection-molding and decorating method, as the resin to be injection molded, a known resin may be used and the resin is not particularly limited. The resin to be injection molded is selected according to the required physical properties of a resin product of interest and cost. As long as the effect of the present invention is not impaired, two or more resins may be mixed together. Examples of the resin to be injection molded include, but are not limited to, acrylic resin, polyphenylene oxide polystyrene-based resin, polycarbonate-based resin, styrene copolymer-based resin, polystyrene-based resin and polypropylene-based resin.

The resin to be injection molded may be mixed with additives such as a heat-resistant stabilizer, an oxidation-resistant stabilizer, a weather-resistant stabilizer, an ultraviolet absorbent, an organic lubricant, a pigment, a dye, organic or inorganic fine particles, a filler and a nucleating agent as required.

The molded article of the invention in which the sheet is laminated on the resin molded product becomes a

molded article which is excellent in hard coat properties such as abrasion resistance and high surface hardness as well as the visibility of the printed or deposited layer.

Examples

The following examples are provided for the purpose of further illustrating the present invention. The measurement of physical properties in Reference Examples, Examples and Comparative Examples was carried out as follows.

(1) Specific viscosity

A pellet was dissolved in methylene chloride to a concentration of about 0.7 g/dL to measure the Specific viscosity of the resulting solution at 20°C with an Ostwald's viscosimeter (RIGO AUTO VISCOSIMETER TYPE VMR-0525·PC). The specific viscosity ($\eta_{sp}$) is obtained from the following equation.

$$\eta_{sp} = t/t_0 - 1$$

t: flow time of a specimen solution
to: flow time of a solvent alone

(2) Glass transition temperature

This was measured with the DSC (Model DSC2910) of TA Instruments Co., Ltd.

(3) Thickness and layer thickness

To measure the thickness of the whole film, a dial gauge was used to measure the thickness of each sample cut out from the film at 5 arbitrary sites so as to obtain the average value of these measurement data.

(4) Plane orientation coefficient (fn)

The refractive index in the film forming direction (Nx), the refractive index in the width direction (Ny) and the refractive index in the thickness direction (Nz) of the surface of the base film were measured by using sodium D line (wavelength of 589 nm) as a light source, methylene iodide as an intermediate liquid and the DR-M2 Abbe refractometer of Atago Co., Ltd. equipped with polarization eyepiece lenses so as to calculate the plane orientation coefficient (fn) from the following equation (6).

$$\text{Plane orientation coefficient } fn = (Nx + Ny)/2 - Nz \quad (6)$$

(5) Total light transmittance and haze

The total light transmittance and haze were measured by using the NDH-200 (D65 light source) of Nippon Denshoku Industries Co., Ltd. The measurement was made 5 times and the average value of the measurement data was used as a measurement value.

(6) Solvent resistance of base film

After 3 ml of each of methyl ethyl ketone, methyl isobutyl ketone and toluene was dropped on different spots of the haze measurement portion of the base film and left for 6 hours, the solvent was cleaned off to judge a change before and after the dropping of the solvent visually.

○: not changed by all the solvents
Δ: not ○ and not X
X: whitened and dissolved by all the solvents

(7) Heat moldability of the sheet used in molded article

The heat moldability of the sheet used in the molded article at 100 to 200°C was evaluated by using a cup type vacuum molding machine. The transferability of each corner portion, thickness uniformity and the existence of whitening were evaluated by using a cylindrical cup-like mold having a diameter of 50 mm, a depth of 50 mm and a fixed diameter in the depth direction.

○: transferability, thickness uniformity and whitening resistance are excellent

X: NG in any one of them

(8) Toughness of the sheet

For the evaluation of heat moldability by a vacuum molding machine, whether the film was cracked or broken when it was stretched in a mold shape and removed from the mold was judged based on the following criteria.
Excellent: when the film is removed, it is not cracked or broken
Cracked: when the film is removed, the film is cracked or broken

(9) Deformation resistance and distortion resistance of the sheet

The deformation and distortion of the sheet after molding were evaluated visually by using the above cup type vacuum molding machine.

(10) Abrasion resistance of molded article

The surface of the hard coat layer of the sheet was rubbed with Steel Wool #0000 10 times, wherein one reciprocation of rubbing counts as 1 times, under a load of 1,000 g/cm$^2$ to judge its abrasion resistance visually. (11) Pencil hardness of the sheet

This was measured in accordance with JIS K-5400. The measurement was made 5 times to obtain the average value of the measurement data. A decorative sheet having a pencil hardness of HB or more was accepted.

(12) Adhesion between the sheet and resin molded product

Cuts as deep as the resin molded product were made in a grid form on the surface of the sheet laminated on the resin molded product. Then an adhesion test was made by putting "Cellotape" (registered trademark) adhesive cellophane tape (24 mm wide, for industrial use) of Nichiban Co., Ltd. on the cuts and stripping the tape by hand to observe and judge the existence of peeling visually.

Example 1

1, 608 parts by weight (11 moles) of isosorbide and 2, 356 parts by weight (11 moles) of diphenyl carbonate were fed to a reactor, and 1.0 part by weight (1 x $10^{-4}$ mole based on 1 mole of the diphenyl carbonate component) of tetramethylammonium hydroxide as a polymerization catalyst and 1.1 x $10^{-3}$ part by weight (0.25 x $10^{-6}$ mole based on 1 mole of the diphenyl carbonate component) of sodium hydroxide were fed to the reactor to carry out a melt reaction by heating at 180°C under normal pressure in a nitrogen atmosphere.

The inside pressure of the reactor was gradually reduced to 13.3 x $10^{-3}$ MPa over 30 minutes under agitation while the formed phenol was distilled off. After the reaction was carried out in this state for 20 minutes, the temperature was raised to 200 °C, the pressure was gradually reduced over 20 minutes to carry out the reaction at 4.00 x $10^{-3}$ MPa for 20 minutes while the phenol was distilled off, and the temperature was further raised to 220 °C to carry out the reaction for 30 minutes and then to 250°C to carry out the reaction for another 30 minutes.

Thereafter, the pressure was gradually reduced to continue the reaction at 2.67 x $10^{-3}$ MPa for 10 minutes and at 1.33 x $10^{-3}$ MPa for 10 minutes, and when the pressure was further reduced to 4.00 x $10^{-5}$ MPa, the temperature was gradually raised to 260°C to carry out the reaction at 260°C and 6.66 x $10^{-5}$ MPa for 1 hour in the end. The polymer after the reaction was pelletized. The obtained polymer had a specific viscosity of 0.26 and a glass transition temperature of 163 °C.

After the obtained polycarbonate resin was dried, melt film formation was carried out by using a 40 mm-diameter single-screw extrusion film forming machine to obtain a film. The cylinder temperature of the extruder was kept at a range of 220 to 260°C, static electricity was applied to the both ends of a sheet extruded from a slit die by using a needle-like edge pinning device, and the sheet was brought into close contact with a casting drum (surface temperature was adjusted to 150°C) to be solidified by cooling from a molten state so as to obtain the base film having a thickness of 100 μm of the present invention. The plane orientation coefficient, total light transmittance, haze, solvent resistance and pencil hardness of the film were evaluated, and the results are shown in Table 1.

Example 2

The melt polymerization of a polycarbonate resin was carried out in the same manner as in Example 1 except that 66.42 parts by weight (0.45 mole) of isosorbide, 11.52 parts by weight (0.15 mole) of 1,3-propanediol (PD) and 129.81 parts by weight (0.61 mole) of diphenyl carbonate were fed to a reactor and 1.0 part by weight($1 \times 10^{-4}$ mole based on 1 mole of the diphenyl carbonate component) of tetramethylammonium hydroxide as a polymerization catalyst and $1.1 \times 10^{-3}$ part by weight ($0.25 \times 10^{-6}$ mole based on 1 mole of the diphenyl carbonate component) of sodium hydroxide were used. The obtained polymer had a specific viscosity of 0.25 and a glass transition temperature of 116°C.

A base film was obtained from the obtained polycarbonate resin in the same manner as in Example 1. The plane orientation coefficient, total light transmittance, haze, solvent resistance and pencil hardness of the film were evaluated, and the results are shown in Table 1.

Example 3

The melt polymerization of a polycarbonate resin was carried out in the same manner as in Example 1 except that 731 parts by weight (5.0 moles) of isosorbide, 720 parts by weight (5.0 moles) of 1,4-cyclohexane dimethanol (CHDM) and 2,142 parts by weight (10 moles) of diphenyl carbonate were fed to a reactor and 1.0 part by weight ($1 \times 10^{-4}$ mole based on 1 mole of the diphenyl carbonate component) of tetramethylammonium hydroxide as a polymerization catalyst and $1.1 \times 10^{-3}$ part by weight ($0.25 \times 10^{-6}$ mole based on 1 mole of the diphenyl carbonate component) of sodium hydroxide were used. The obtained polymer had a specific viscosity of 0.35 and a glass transition temperature of 104°C.

A base film was obtained from the obtained polycarbonate resin in the same manner as in Example 1. The plane orientation coefficient, total light transmittance, haze, solvent resistance and pencil hardness of the film were evaluated, and the results are shown in Table 1.

Example 4

The melt polymerization of a polycarbonate resin was carried out in the same manner as in Example 1 except that 1,169 parts by weight (8.0 moles) of isosorbide, 653 parts by weight (2.0 moles) of 1,1-bis(4-hydroxyphenyl)decane (may be abbreviated as DED hereinafter) and 2,142 parts by weight (10 moles) of diphenyl carbonate were fed to a reactor and 1.0 part by weight ($1 \times 10^{-4}$ mole based on 1 mole of the diphenyl carbonate component) of tetramethylammonium hydroxide as a polymerization catalyst and $1.1 \times 10^{-3}$ part by weight ($0.25 \times 10^{-6}$ mole based on 1 mole of the diphenyl carbonate component) of sodium hydroxide were used. The obtained polymer had a specific viscosity of 0.25 and a glass transition temperature of 110°C. A base film was obtained from the obtained polycarbonate resin in the same manner as in Example 1. The plane orientation coefficient, total light transmittance, haze, solvent resistance and pencil hardness of the film were evaluated, and the results are shown in Table 1.

Example 5

The melt polymerization of a polycarbonate was carried out in the same manner as in Example 1 except that 1, 023 parts by weight (7.0 moles) of isosorbide, 432 parts by weight (3.0 moles) of 1,4-cyclohexane dimethanol, 2,142 parts by weight (10 moles) of diphenyl carbonate and 54 parts by weight (0.20 mole) of stearyl alcohol were fed to a reactor and 1.0 part by weight ($1 \times 10^{-4}$ mole based on 1 mole of the diphenyl carbonate component) of tetramethylammonium hydroxide as a polymerization catalyst and $1.1 \times 10^{-3}$ part by weight ($0.25 \times 10^{-6}$ mole based on 1 mole of the diphenyl carbonate component) of sodium hydroxide were used. The obtained polymer had a specific viscosity of 0.30 and a glass transition temperature of 114°C.

A base film was obtained from the obtained polycarbonate resin in the same manner as in Example 1. The plane orientation coefficient, total light transmittance, haze, solvent resistance and pencil hardness of the film were evaluated, and the results are shown in Table 1.

Example 6

The melt polymerization of a polycarbonate was carried out in the same manner as in Example 1 except that 1,169 parts by weight (8.0 moles) of isosorbide, 2,142 parts by weight (10 moles) of diphenyl carbonate and 236 parts

by weight (2 moles) of hexanediol (HD) were fed to a reactor and 1.0 part by weight ($1 \times 10^{-4}$ mole based on 1 mole of the diphenyl carbonate component) of tetramethylammonium hydroxide as a polymerization catalyst and $1.1 \times 10^{-3}$ part by weight ($0.25 \times 10^{-6}$ mole based on 1 mole of the diphenyl carbonate component) of sodium hydroxide were used. The obtained polymer had a specific viscosity of 0.27, a glass transition temperature of 111°C and a 5 % weight loss temperature of 348°C.

A base film was obtained from the obtained polycarbonate resin in the same manner as in Example 1. The plane orientation coefficient, total light transmittance, haze, solvent resistance and pencil hardness of the film were evaluated, and the results are shown in Table 1.

Example 7

(molding material A)

The polycarbonate resin obtained in Example 6 was prepared.

(molding material B)

Acrylic resin (Acrypet VH001 of Mitsubishi Rayon Co. , Ltd. ; standard grade) was prepared as molding material B for the layer B.

(co-extrusion)

The molding material A and the molding material B were each extruded from a 300 mm-wide T die at a cylinder temperature of 230 to 250°C (molding material A) and 240 to 270°C (molding material B) by using a single-screw extruder having a screw diameter of 40 mm in accordance with a feed block system, one side of each of the molten resins was brought into contact with a cooling roll to be cooled, and then a multi-layer film having a width of 200 mm and consisting of layer B, layer A and layer B was formed. The plane orientation coefficient, total light transmittance, haze, solvent resistance, pencil hardness, heat moldability and toughness of the film were evaluated, and the results are shown in Table 2.

Example 8

(molding material A)

The polycarbonate resin obtained in Example 6 was prepared.

(molding material B)

Preparation Example 1 (production of polyester-based thermoplastic elastomer)

175 parts by weight of dimethyl isophthalate, 23 parts by weight of dimethyl sebacate and 140 parts by weight of hexamethylene glycol were subjected to a transesterification reaction by using a dibutyltin diacetate catalyst and polycondensed under reduced pressure to obtain an amorphous polyester (soft segment) which had an intrinsic viscosity of 1.06 and did not show any heat absorption peak caused by the melting of a crystal in DSC measurement.

A pellet (hard segment) of polybutylene terephthalate having an intrinsic viscosity of 0.98 obtained by polycondensation was dried, 107 parts of this pellet was added to this polyester so as to carry out a reaction at 240°C for 45 minutes, and 0.1 part of phenylphosphonic acid was added to terminate the reaction. The obtained polymer had a melting point of 190°C and an intrinsic viscosity of 0.93.

A polycarbonate resin pellet (Panlite L-1250 of Teijin Chemicals Ltd., viscosity average molecular weight of 23,700) and the polyester-based thermoplastic elastomer produced above were pre-dried in advance and mixed together in a weight ratio of 90/10 (100/11.1) (parts by weight) of polycarbonate resin/polyester-based thermoplastic elastomer by means of a twin-cylinder mixer, and the resulting mixture was extruded at a cylinder temperature of 260°C by using a double-screw extruder to be pelletized so as to obtain a molding material A for the layer A. The glass transition temperature of the molding material A was 111°C.

(co-extrusion)

The molding material A and the molding material B were each extruded from a 300 mm-wide T die at a cylinder

temperature of 230 to 250°C (molding material A) and 240 to 270°C (molding material B) by using a single-screw extruder having a screw diameter of 40 mm in accordance with the feed block system, one side of each of the molten resins was brought into contact with a cooling roll to be cooled, and then a multi-layer film having a width of 200 mm and consisting of layer A, layer B and layer A was formed. The plane orientation coefficient, total light transmittance, haze, solvent resistance, pencil hardness, heat moldability and toughness of the film were evaluated, and the results are shown in Table 2.

[printed or deposited layer]

"NT-Hiramic" (registered trademark) 701R White of Dainichiseika Color & Chemicals Mfg. Co. , Ltd. was mixed with a mixed solution of ethyl acetate, methyl ethyl ketone and isopropyl alcohol in a weight ratio of 2:2:1 to adjust its printing viscosity to 15 seconds (Zahn Cup #3), and the base film was printed with a pattern by a gravure printing technique and dried in a 70°C oven for 10 seconds to form a 35 μm-thick printed or deposited layer.

[hard coat layer]

An active ray curable resin comprising 67 wt% of dipentaerythritol hexaacrylate, 29 wt% of N-vinylpyrrolidone and 4 wt% of 1-hydroxycyclohexylphenyl ketone was diluted with a 1/1 mixed solution of toluene and ethyl acetate to a concentration of 50 wt%, applied to the base film or the printed or deposited layer by a die coating technique, dried in a 70°C oven for 2 minutes and irradiated with ultraviolet light from a high-pressure mercury lamp having an irradiation intensity of 80 W/cm and set at a height of 9 cm from the surface to be coated for 15 seconds to be cured so as to form a hard coat layer having a thickness of 5 μm.

[adhesive layer]

A resin comprising 98 wt% of "Oribine" (registered trademark) BPS-1109 acrylic adhesive of Toyo Ink Chemical Industry Co., Ltd. and 2 wt% of "Oribine" (registered trademark) BHS-8515 isocyanate-based curing agent of Toyo Ink Chemical Industry Co., Ltd. was diluted with ethyl acetate to a concentration of 50 wt%, applied to the base film or the decorative layer by a gravure coating technique and dried in a 70 °C oven for 10 seconds to form an adhesive layer having a thickness of 30 μm.

Example 9

A printed or deposited layer was formed on the surface in contact with the casting drum of the base film produced in Example 2, and an adhesive layer was formed on the printed or deposited layer. Further, a hard coat layer was formed on the surface not in contact with the casting drum of the base film to obtain the molded article sheet used in the molded article of the present invention. The methods of forming the printed or deposited layer, the adhesive layer and the hard coat layer are as described above.

Then, the obtained sheet was heated at 80°C and formed into a cup-like molded product at 85°C by using a cylindrical cup mold having a diameter of 50 mm, a depth of 50 mm and a fixed diameter in the depth direction and a vacuum molding machine, and methacrylic resin ("Sumipex" (registered trademark) LG35 ABS resin of Sumitomo Chemical Co., Ltd. ) heated at 250°C was injected into the cup-like molded product as a molding resin. After the methacrylic acid was solidified by cooling, the cup-like molded product was taken out from the mold to obtain a decorative molded product having the above sheet which was laminated on the resin molded product. The sheet was excellent in moldability (transferability, thickness uniformity), had no problem with deformation resistance and distortion resistance after molding and was not whitened. The surface hardness of the hard coat layer measured by a steel wool test was high without a scratch, and there was no problem with the adhesion of the sheet without peeling.

Example 10

A sheet used in the molded article of the invention was obtained from the base film produced in Example 5 in the same manner as in Example 9. The sheet was excellent in moldability (transferability, thickness uniformity), had no problem with deformation resistance and distortion resistance after molding and was not whitened. The surface hardness of the hard coat layer measured by a steel wool test was high without a scratch, and there was no problem with the adhesion of the sheet without peeling.

Then, a cup-like molded article was produced by using the obtained decorative sheet for injection molding in the same manner as in Example 9 to obtain a decorative molded article having the above sheet used in the molded article of the present invention which was laminated on the resin molded product.

Example 11

A sheet was obtained from the base film produced in Example 6 in the same manner as in Example 9. The sheet was excellent in moldability (transferability, thickness uniformity), had no problem with deformation resistance and distortion resistance after molding and was not whitened. The surface hardness of the hard coat layer measured by a steel wool test was high without a scratch, and there was no problem with the adhesion of the sheet without peeling.
Then, a cup-like molded article was produced by using the obtained decorative sheet for injection molding in the same manner as in Example 9 to obtain a decorative molded article having the above sheet of the present invention which was laminated on the resin molded product.

Comparative Example 1

Film formation was carried out by using polyethylene terephthalate polymer (PET) in the same manner as in Example 1, and the obtained film was stretched to 3.0 times in the longitudinal direction at 95°C with rolls and to 3.1 times in the transverse direction at 115°C with a tenter, relaxed 5 % at 200°C and heat set for 5 seconds to obtain a base film having a thickness of 9 μm. The plane orientation coefficient, total light transmittance, haze, solvent resistance and pencil hardness of the film were evaluated, and the results are shown in Table 1.
The sheet used in the molded article of the present invention was obtained by using this base film in the same manner as in Example 9. Although the whitening of the sheet was not seen, the sheet was nonuniform in thickness and its warp deformation was seen. The surface hardness of the hard coat layer measured by a steel wool test was high without a scratch. There was no problem with the adhesion of the sheet without peeling.
A decorative molded article having the above sheet which was laminated on a resin molded product was obtained in the same manner in Example 9 by using the obtained sheet.

Comparative Example 2

Film formation was carried out by using a polycarbonate resin pellet (Panlite L-1250 of Teijin Chemicals Ltd., viscosity average molecular weight of 23,700) in the same manner as in Example 1 to form a base film.
The plane orientation coefficient, total light transmittance, haze, solvent resistance, pencil hardness, heat moldability and toughness of the film were evaluated, and the results are shown in Tables 1 and 2.
Then, a decorative molded article having the above sheet which was laminated on a resin molded product was obtained in the same manner as in Example 9 by using the obtained sheet.
Although the whitening of the sheet was not seen, the surface of the hard coat layer was easily scratched in a steel wool test. There was no problem with the adhesion of the decorative sheet without peeling.

Comparative Example 3

Film formation was carried out by using acrylic resin (Acrypet VH001 of Mitsubishi Rayon Co. , Ltd. ; standard grade) in the same manner as in Example 1 to form a base film.
The plane orientation coefficient, total light transmittance, haze, solvent resistance, heat moldability and toughness of the film were evaluated, and the results are shown in Table 2.
Then, a decorative molded article according to the invention having the above sheet which was laminated on a resin molded product was obtained in the same manner as in Example 9 by using the obtained sheet.
Although the whitening of the sheet was not seen and the surface of the hard coat layer measured by a steel wool test was high without a scratch, the decorative sheet was easily broken when it was taken from the mold. There was no problem with the adhesion of the decorative sheet without peeling.

Table 1

| | ISS | Diol | Monoalcohol | Specific viscosity | Tg | Plane orientation coefficient | Total light transmittance (%) | Haze (%) | Solvent resistance | Pencil hardness |
|---|---|---|---|---|---|---|---|---|---|---|
| Ex.1 | 100 | 0 | | 0.26 | 163 | 0.000 | 93 | 0.4 | ○ | H |
| Ex.2 | 75 | PD 25 | | 0.25 | 116 | 0.000 | 92 | 0.5 | ○ | F |
| Ex.3 | 50 | CHDM 50 | | 0.35 | 104 | 0.000 | 92 | 0.5 | Δ | F |
| Ex.4 | 80 | DED 20 | | 0.25 | 110 | 0.000 | 93 | 0.4 | ○ | H |
| Ex.5 | 70 | CHDM 30 | Stearyl alcohol 2 | 0.3 | 114 | 0.000 | 92 | 0.5 | ○ | H |
| Ex.6 | 80 | HD 20 | | 0.27 | 111 | 0.000 | 92 | 0.3 | ○ | H |
| C. Ex.1 | Stretched PET | - | - | - | - | 0.160 | 91 | 7 | ○ | H |
| C. Ex.2 | PC | - | - | - | 150 | 0.000 | 90 | 0.3 | × | 2B |

Ex.: Example C.Ex.: Comparative Example

Table 2

| | Molding material A | Molding material B | Constitution | Plane orientation coefficient | Total light transmittance | Haze (%) | Solvent resistance | Heat moldability | Toughness | Pencil hardness |
|---|---|---|---|---|---|---|---|---|---|---|
| Ex.7 | Ex.6 | PMMA | Layer B/A/B 3-layer of 2 kinds | 0.000 | 92 | 0.4 | ○ | ○ | Satisfactory | 2H |
| Ex.8 | Ex.6 | PC+ Thermoplastic elastomer | A/B/A 3-layer of 2 kinds | 0.000 | 91 | 0.2 | ○ | ○ | Satisfactory | HB |
| C. Ex.1 | Stretched PET | - | Single layer | 0.160 | 91 | 7 | ○ | × | Satisfactory | H |
| C. Ex.2 | PC | - | Single layer | 0.000 | 90 | 0.3 | × | × | Satisfactory | 2B |
| C. Ex.3 | PMMA | - | Single layer | 0.000 | 92 | 1.0 | ○ | ○ | cracked | HB |

Ex.: Example C.Ex.: Comparative Example

As described above, the present invention can provide a sheet which comprises a polycarbonate resin containing a constituent unit able to be derived from a carbohydrate such as starch which is a biomass resource as the substrate of a base film and is excellent in abrasion resistance, high surface hardness, moldability, chemical resistance, deformation resistance, distortion resistance and whitening resistance.

The decorative molded article obtained according to the invention by using the above sheet is used and useful as an electric/electronic part, an information communication part or a car part.

## Claims

**1.** A molded article, which comprises:

(i) a molded resin comprising an acrylic resin or a polycarbonate resin, and
(ii) a sheet which comprises a base film (ii-1) comprising a polycarbonate resin (I) and a printed or deposited layer (ii-2) formed on at least one side of the base film (ii-1), **characterized in that** the polycarbonate resin (I) comprises an ether diol residue represented by the following formula (1) in an amount of 15 to 100 mol% based on the total of all diol residues.

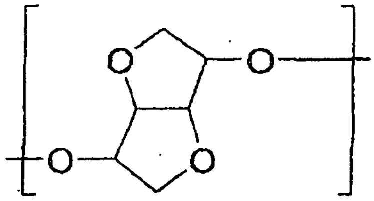

(1)

**2.** The molded article according to claim 1, wherein the polycarbonate resin (I) further comprises an aliphatic diol residue derived from an aliphatic dihydroxy compound.

**3.** The molded article according to claim 2, wherein the aliphatic dihydroxy compound is a linear aliphatic diol.

**4.** The molded article according to claim 2, wherein the aliphatic dihydroxy compound is an alicyclic diol.

**5.** The molded article according to any one of claim 1, wherein the polycarbonate resin (I) further comprises an aromatic diol residue derived from an aromatic dihydroxy compound.

**6.** The molded article according to claim 1, wherein the sheet further comprises an adhesive layer (ii-4), and wherein the base film (ii-1), the printed or deposited layer (ii-2) and the adhesive layer (ii-4) are formed in this order in the sheet.

**7.** The molded article according to claim 1, wherein the sheet further comprises a hard coat layer (ii-3) and an adhesive layer (ii-4), and wherein the hard coat layer (ii-3), the base film (ii-1), the printed or deposited layer (ii-2) and an adhesive layer (ii-4) are formed in this order in the sheet.

**8.** The molded article according to claim 1, wherein the total thickness of the base film (ii-1) is 10 $\mu$m to 600 $\mu$m.

**9.** The molded article according to claim 1, wherein the base film (ii-1) has a layer (layer A) comprising a resin composition comprising a polycarbonate resin (I) and a layer (layer B) comprising an acrylic resin and is a multi-layer film having the layer B on at least one side of the layer A.

**10.** The molded article according to claim 1, wherein the base film (ii-1) has a layer (layer A) comprising a resin composition comprising a polycarbonate resin (I) having an ether diol residue and a layer (layer B) comprising a resin composition comprising a polycarbonate resin and a polyester-based thermoplastic elastomer and is a multi-layer film having the layer A on at least one side of the layer B.

**11.** The molded article according to claim 1, wherein the base film (ii-1) is an unstretched film.

**12.** The molded article according to claim 1, wherein the haze of the base film (ii-1) is 0 to 10 %.

13. The molded article according to claim 1, wherein the total light transmittance of the base film (ii-1) is 85 to 100%.

**Patentansprüche**

1. Formartikel, welcher umfasst:

(i) ein geformtes Harz, welches ein Acrylharz oder ein Polycarbonatharz umfasst, und
(ii) eine Folie, welche einen Basisfilm (ii-1), welcher ein Polycarbonatharz (I) umfasst, und eine bedruckte oder abgelagerte Schicht (ii-2), die auf mindestens einer Seite des Basisfilms (ii-1) gebildet ist, umfasst, **dadurch gekennzeichnet, dass** das Polycarbonatharz (I) einen Dioletherrest, dargestellt durch die nachfolgende Formel (1), in einer Menge von 15 bis 100 Mol%, basierend auf der Summe aller Diolreste, umfasst.

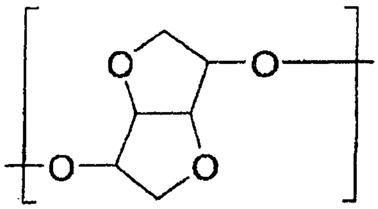

(1)

2. Formartikel gemäß Anspruch 1, wobei das Polycarbonatharz (I) ferner einen aliphatischen Diolrest, welcher von einer aliphatischen Dihydroxyverbindung stammt, umfasst.

3. Formartikel gemäß Anspruch 2, wobei die aliphatische Dihydroxyverbindung ein lineares aliphatisches Diol ist.

4. Formartikel gemäß Anspruch 2, wobei die aliphatische Dihydroxyverbindung ein alizyclisches Diol ist.

5. Formartikel gemäß Anspruch 1, wobei das Polycarbonatharz (I) ferner einen aromatischen Diolrest, welcher von einer aromatischen Dihydroxyverbindung stammt, umfasst.

6. Formartikel gemäß Anspruch 1, wobei die Folie ferner eine Haftschicht (ii-4) umfasst und wobei der Basisfilm (ii-1), die bedruckte oder abgelagerte Schicht (ii-2) und die Haftschicht (ii-4) in dieser Reihenfolge in der Folie gebildet sind.

7. Formartikel gemäß Anspruch 1, wobei die Folie ferner eine harte Deckschicht (ii-3) und eine Haftschicht (ii-4) umfasst und wobei die harte Deckschicht (ii-3), der Basisfilm (ii-1), die bedruckte oder abgelagerte Schicht (ii-2) und eine Haftschicht (ii-4) in dieser Reihenfolge in der Folie gebildet sind.

8. Formartikel gemäß Anspruch 1, wobei die Gesamtdicke des Basisfilms (ii-1) 10 $\mu$m bis 600 $\mu$m beträgt.

9. Formartikel gemäß Anspruch 1, wobei der Basisfilm (ii-1) eine Schicht (Schicht A), welche eine Harzzusammensetzung, ein Polycarbonatharz (I) umfassend, und eine Schicht (Schicht B), ein Acrylharz umfassend, umfasst und ein Mehrschichtfilm mit einer Schicht B auf mindestens einer Seite der Schicht A ist.

10. Formartikel gemäß Anspruch 1, wobei der Basisfilm (ii-1) eine Schicht (Schicht A), welche eine Harzzusammensetzung, ein Polycarbonatharz (I) mit einem Dioletherrest umfasst und eine Schicht (Schicht B), welche eine Harzzusammensetzung, ein Polycarbonatharz und ein polyesterbasiertes thermoplastisches Elastomer umfassend, umfasst und der ein Mehrschichtfilm mit der Schicht A auf mindestens einer Seite von Schicht B ist.

11. Formartikel gemäß Anspruch 1, wobei der Basisfilm (ii-1) ein ungedehnter Film ist.

12. Formartikel gemäß Anspruch 1, wobei die Trübung des Basisfilms (ii-1) 0 bis 10% beträgt.

13. Formartikel gemäß Anspruch 1, wobei die Gesamtlichtdurchlässigkeit des Basisfilms (ii-1) 85 bis 100% beträgt.

## Revendications

1. Article moulé, qui comprend :

(i) une résine moulée comprenant une résine acrylique ou une résine de polycarbonate, et
(ii) une feuille qui comprend un film de base (ii-1) comprenant une résine de polycarbonate (I) et une couche imprimée ou déposée (ii-2) formée sur au moins une face du film de base (ii-1), **caractérisé en ce que** la résine de polycarbonate (I) comprend un résidu éther diol représenté par la formule (1) suivante en une quantité de 15 à 100 % en mole sur la base du total de tous les résidus diol.

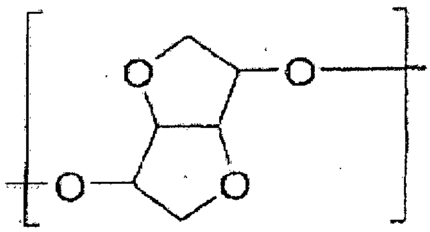

(1)

2. Article moulé selon la revendication 1, dans lequel la résine de polycarbonate (I) comprend en outre un résidu diol aliphatique dérivé d'un composé de dihydroxy aliphatique.

3. Article moulé selon la revendication 2, dans lequel le composé de dihydroxy aliphatique est un diol aliphatique linéaire.

4. Article moulé selon la revendication 2, dans lequel le composé de dihydroxy aliphatique est un diol alicyclique.

5. Article moulé selon la revendication 1, dans lequel la résine de polycarbonate (I) comprend en outre un résidu diol aromatique dérivé d'un composé de dihydroxy aromatique.

6. Article moulé selon la revendication 1, dans lequel la feuille comprend en outre une couche adhésive (ii-4), et dans lequel le film de base (ii-1), la couche imprimée ou déposée (ii-2) et la couche adhésive (ii-4) sont formés dans cet ordre dans la feuille.

7. Article moulé selon la revendication 1, dans lequel la feuille comprend en outre une couche de revêtement dur (ii-3) et une couche adhésive (ii-4), et dans lequel la couche de revêtement dur (ii-3), le film de base (ii-1), la couche imprimée ou déposée (ii-2) et une couche adhésive (ii-4) sont formés dans cet ordre dans la feuille.

8. Article moulé selon la revendication 1, dans lequel l'épaisseur totale du film de base (ii-1) est de 10 μm à 600 μm.

9. Article moulé selon la revendication 1, dans lequel le film de base (ii-1) comporte une couche (couche A) comprenant une composition de résine comprenant une résine de polycarbonate (I) et une couche (couche B) comprenant une résine acrylique et est un film multicouche ayant la couche B sur au moins une face de la couche A.

10. Article moulé selon la revendication 1, dans lequel le film de base (ii-1) comporte une couche (couche A) comprenant une composition de résine comprenant une résine de polycarbonate (I) contenant un résidu éther diol et une couche (couche B) comprenant une composition de résine comprenant une résine de polycarbonate et un élastomère thermoplastique à base de polyester et est un film multicouche ayant la couche A sur au moins une face de la couche B.

11. Article moulé selon la revendication 1, dans lequel le film de base (ii-1) est un film non étiré.

12. Article moulé selon la revendication 1, dans lequel le trouble du film de base (ii-1) est de 0 à 10 %.

13. Article moulé selon la revendication 1, dans lequel la transmission totale de lumière du film de base (ii-1) est de 85 à 100 %.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004082565 A
- GB 1079686 A
- JP 56055425 A
- WO 2004111106 A
- JP 2009167296 A
- JP 2001019885 A
- JP 50019132 B